(19) Europäisches Patentamt
European Patent Office
Office européen des brevets

(11) **EP 2 075 298 A2**

(12) **EUROPÄISCHE PATENTANMELDUNG**

(43) Veröffentlichungstag:
**01.07.2009  Patentblatt 2009/27**

(51) Int Cl.:
***C09J 153/00*** *(2006.01)*

(21) Anmeldenummer: 08170788.7

(22) Anmeldetag: **05.12.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **21.12.2007  DE 102007063083**

(71) Anmelder: **tesa SE**
**20253 Hamburg (DE)**

(72) Erfinder:
• **Krawinkel, Thorsten**
**22457 Hamburg (DE)**
• **Ring, Christian**
**21435 Stelle (DE)**

(54) **Klebemasse für unpolare Substrate**

(57) Beschrieben ist eine Haftklebemasse, die auch bei tiefen Temperaturen eine hohe Klebkraft zu Substraten niedriger Oberflächenenergien aufbaut. Die Klebemasse umfasst ein erstes Blockcopolymer der allgemeinen Struktur A-B und ein zweites Blockcopolymer, das aus mindestens zwei und höchstens elf verbundenen Untereinheiten der allgemeinen Struktur A-B besteht, wobei A jeweils ein Polymerblock aus vinylaromatischen Monomereinheiten und B jeweils ein Poly-(1,3-Dien) ist. Das erste Blockcopolymer ist in der Klebemasse zu einem Anteil von mindestens 50 Gew.-% vorhanden, bezogen auf die Gesamtmasse der Blockcopolymere in der Klebemasse. Erfindungsgemäß weist die Klebemasse weiterhin Klebharze auf, von denen mindestens 30 Gew.-% bei Raumtemperatur flüssig vorliegen und die mit den Polymerblöcken B mischbar sind, nicht aber mit den Polymerblöcken A. Ferner ist ein Klebeband mit einer derartigen Haftklebemasse beschrieben.

EP 2 075 298 A2

**Beschreibung**

Die Erfindung betrifft eine Haftklebemasse umfassend Klebharze, ein erstes Blockcopolymer mit der allgemeinen Struktur A-B und ein zweites Blockcopolymer, das aus mindestens zwei und höchstens elf verbundenen Untereinheiten der allgemeinen Struktur A-B besteht, wobei A jeweils ein Polymerblock ist, der Monomereinheiten aus der Gruppe der zumindest eine aromatische Gruppe enthaltenden Vinylverbindungen umfasst, und B jeweils ein Polymerblock ist, der Monomereinheiten aus der Gruppe der unsubstituierten und substituierten 1,3-Diene umfasst, und wobei das erste Blockcopolymer zu einem Anteil von mindestens 50 Gew.-% vorhanden ist, bezogen auf die Gesamtmasse der Blockcopolymere in der Klebemasse, sowie die Verwendung einer solchen Haftklebemasse zum Herstellen eines haftklebrigen Flächenelements. Ferner betrifft die Erfindung das haftklebrige Flächenelement mit einer derartigen Haftklebemasse sowie dessen Verwendung zum Verkleben mit einer Oberfläche, die eine Oberflächenenergie von weniger als 45 mJ/m$^2$ aufweist.

Eine der wichtigsten Technologien zum Verbinden zweier Werkstücke stellt das Verkleben der Werkstücke dar. Durch gezielte Auswahl der eingesetzten Klebemassen gelingt es dabei, eine Vielzahl unterschiedlicher Materialien über Klebeverbindungen miteinander zu verbinden. Als Klebemassenart, die ein einfaches Verbinden zweier Werkstücke ermöglicht, kommen bevorzugt Haftklebemassen zum Einsatz.

Als Haftklebemassen werden Klebemassen bezeichnet, die bereits unter relativ schwachem Andruck eine dauerhafte Verklebung mit dem Substrat (dem Untergrund, Haftgrund oder Klebegrund) erlauben. Die Verklebbarkeit der Klebemassen beruht auf ihren adhäsiven Eigenschaften.

Als "Adhäsion" wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche und ist als Anfassklebrigkeit (dem so genannten "Tack") und als Klebkraft bestimmbar. Um die Adhäsion einer Klebemasse gezielt zu beeinflussen, werden der Klebemasse häufig Weichmacher und/oder klebkraftsteigernde Harze (so genannte "Tackifier") zugesetzt.

Als "Kohäsion" bezeichnet man üblicherweise den physikalischen Effekt, der den inneren Zusammenhalt eines Stoffes oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse in einer Nachbehandlung ionisierenden Strahlen ausgesetzt wird.

Die klebtechnischen Eigenschaften einer Haftklebemasse werden in erster Linie von dem Verhältnis adhäsiver und kohäsiver Eigenschaften bestimmt. So ist es beispielsweise für einige Anwendungen wichtig, dass die eingesetzten Klebemassen hochkohäsiv sind, also über einen besonders starken inneren Zusammenhalt verfügen, während für andere Anwendungen eine besonders hohe Adhäsion erforderlich ist.

Als schwierig hat es sich in der Praxis herausgestellt, geeignete Haftklebemassen zu finden, die eine hohe Klebkraft auf niederenergetischen Oberflächen aufweisen. Niederenergetische Oberflächen im Sinne dieser Erfindung sind alle Oberflächen, die aus einem Material bestehen, dessen Oberflächenenergie kleiner als 45 mJ/m$^2$ ist, häufig sogar kleiner als 40 mJ/m$^2$ oder sogar als 35 mJ/m$^2$. Derartige Materialien werden auch als unpolare Materialien bezeichnet. Typische Substanzen mit niederenergetischen Oberflächen sind etwa Polyethylen niedriger Dichte (LDPE), Polyethylen hoher Dichte (HDPE), Polypropylen oder Copolymere aus Ethylen und Propylen sowie weiteren Olefinen, beispielsweise Ethylen-Propylen-Dien-Kautschuk (EPDM).

Da es sich bei Polyethylen, Polypropylen und Ethylen-Propylen-Dien-Kautschuken um häufig eingesetzte Folienmaterialien handelt, die darüber hinaus auch in anderer Form verwendet werden, beispielsweise als Vollkörper oder Schäume, besteht ein großer Bedarf an Klebemassen zur Verklebung derartiger unpolarer Materialien.

Die meisten Haftklebemassen, die auf dem Markt erhältlich sind, können für derartige niederenergetische Oberflächen nur begrenzt genutzt werden, da diese Klebemassen keine hinreichende Klebkraft zu solchen Oberflächen aufbauen können. Um eine herkömmliche Haftklebemasse für eine Verklebung auf unpolaren Substraten anzupassen, werden dieser üblicherweise Hilfsstoffe hinzugefügt, die die Klebemasse insgesamt weicher werden lassen, beispielsweise Klebharze oder Weichmacher. Dies hat zwar eine Erhöhung der Adhäsion an niederenergetischen Oberflächen zur Folge, die jedoch mit einer Abnahme der Viskosität einhergeht und so insgesamt eine Verringerung der Kohäsion zur Folge hat, so dass insgesamt keine mechanisch belastbare Verbindung realisierbar ist.

Neben der Auswahl einer Haftklebemasse im Hinblick auf die Beschaffenheit der zu verklebenden Oberfläche ist ebenfalls von Bedeutung, unter welchen Umgebungsbedingungen eine Verklebung gewährleistet sein soll. So ist es etwa problematisch, Haftklebemassen zu finden, die bei niedrigen Temperaturen eine hohe Klebkraft auf dem entsprechenden Substrat aufweisen, gleichzeitig aber auch bei Raumtemperatur oder sogar noch höheren Temperaturen eine hinreichend hohe Klebkraft bieten. Dieses Problem tritt etwa bei Verklebungen auf, die zum Verschließen von Gefriergutbehältern, zum Beispiel Gefrierbeuteln, verwendet werden.

Das Haftklebeverhalten einer Klebemasse hängt unter anderem von der Glasübergangstemperatur $T_G$ der Klebemasse ab, da diese bei Temperaturen unterhalb der Glasübergangstemperatur erhärten und somit ihre Anfassklebrigkeit wie auch ihre Klebkraft verlieren. Die nachfolgend angegebenen Temperaturen entsprechen solchen, die in quasistationären Experimenten erhalten werden, etwa mit Hilfe der Dynamischen Differenzkalorimetrie (DSC).

Es sind einige Haftklebemassensysteme bekannt, die eine hohe Klebkraft zu unpolaren Substraten aufbauen können. Darüber hinaus wurden viele Versuche unternommen, durch gezielte Additivierung das Klebeverhalten derartiger Haftklebemassen dahingehend zu ändern, dass diese auch bei tiefen Temperaturen eine hohe Verklebungsfestigkeit aufweisen.

So sind beispielsweise Klebemassen auf der Basis von Styrolblockcopolymeren bekannt, die eine höhere Klebkraft an niederenergetischen Oberflächen ausbilden als dies bei anderen Haftklebemassen wie etwa solchen auf der Basis von Acrylaten oder Naturkautschuken der Fall ist. Zur weiteren Steigerung der Klebkraft solcher Styrolblockcopolymermassen auf unpolaren Substraten können diesen zusätzlich unterschiedliche Additive und Klebharze beigemengt werden.

So sind aus der US 5,453,319 beispielsweise Haftklebemassen bekannt, die ein Diblockcopolymer (also ein Blockcopolymer aus zwei unterschiedlichen Homopolymerblöcken; dies wird auch als Zweiblockcopolymer bezeichnet) vom allgemeinen Typ A-B und ein Multiblockcopolymer, das aus Untereinheiten vom allgemeinen Typ A-B besteht, sowie zusätzlich ein festes Klebharz und ein flüssiges Klebharz (20 Gew.-%) mit aliphatischen und aromatischen Bestandteilen enthalten. Polymerblock A enthält hierbei aromatische Kohlenwasserstoffe mit einer Monoalkenylgruppe und Polymerblock B 1,3-Butadien. Mit diesem System ist es zwar möglich, Glasübergangstemperaturen bis zu -12 °C zu erhalten, jedoch zeigten derartige Systeme stets eine signifikant schlechte Scherfestigkeit, da die Kohäsion solcher Systeme nicht ausreichend war, um eine stabile Klebeverbindung auch bei niedrigen Temperaturen zu ermöglichen. Darüber hinaus erlauben die in der US 5,453,319 beschriebenen Proben keinen Vergleich mit herkömmlichen Produkten, da die Klebemasseschichten dieser Proben jeweils sehr hohen Schichtdicken aufwiesen und die Klebkraft einer Klebemasse mit deren Schichtdicke ansteigt.

Weiterhin sind aus EP 1 151 052 Haftklebemassen bekannt, die ebenfalls ein Diblockcopolymer vom allgemeinen Typ A-B und ein Multiblockcopolymer aus Untereinheiten vom allgemeinen Typ A-B (mit Polymerblöcken A aus aromatischen Kohlenwasserstoffen mit einer Alkenylgruppe und mit Polymerblöcken B aus 1,3-Butadien) sowie zusätzlich ein Polyphenylenoxidharz und ein Klebharz enthalten. Bei Verwendung dieser Klebemasse wurde zwar eine Erhöhung der Klebkraft auf unpolaren Untergründen festgestellt, die Anwendbarkeit bei niedrigen Temperaturen jedoch nicht verbessert. Insgesamt ist bekannt, dass bei einem hohen Anteil an Diblockcopolymeren in der Haftklebemasse deren Klebkraft verbessert werden kann, deren Kohäsion jedoch gleichzeitig erheblich beeinträchtigt wird.

Eine Aufgabe der vorliegenden Erfindung war es daher, eine Haftklebemasse zur Verfügung zu stellen, die diese Nachteile beseitigt, die insbesondere angepasst ist, eine hohe Klebkraft zu niederenergetischen Oberflächen auszubilden, und daher auf der Basis von Blockcopolymeren mit einem hohen Gehalt an Diblockcopolymeren ausgebildet ist und einen großen Anteil an flüssigen Klebharzen umfasst, gleichzeitig aber auch für Verklebungen bei niedrigen Temperaturen eingesetzt werden kann, ohne dass die Kohäsion der Klebemasse beeinträchtigt wird.

Diese Aufgabe wird erfindungsgemäß durch eine Haftklebemasse der eingangs genannten Art gelöst, bei der mindestens 30 Gew.-% der Klebharze bei Raumtemperatur flüssig sind, bezogen auf die Gesamtmasse der Klebharze, wobei die bei Raumtemperatur flüssigen Klebharze solche Klebharze sind, die mit den Polymerblöcken A nicht homogen mischbar sind und außerdem mit den Polymerblöcken B im wesentlichen homogen mischbar sind. Somit wird erfindungsgemäß also ein Klebharz mit festeren Bestandteilen und mit weicheren Bestandteilen eingesetzt, wobei letztere mit den Elastomerblöcken des Typs B in Wechselwirkung treten.

Durch diese Ausbildung wird sichergestellt, dass die erfindungsgemäße Haftklebemasse einen großen Anteil an flüssigen Harzen enthält. Derartige Klebemassen sind infolge des hohen Anteils an bei Raumtemperatur flüssigen Harzen von mehr als 30 Gew.-% auch bei tieferen Temperaturen sehr weich und besitzen damit eine hohe Anfassklebrigkeit.

Die Klebharze werden derart ausgesucht, dass sie mit den Polymerblöcken vom Typ A - also mit den Blöcken mit Monomereinheiten, die zumindest eine aromatische Gruppe enthaltende Vinylverbindungen umfasst - nicht mischbar sind. Da es sich bei diesen Polymerblöcken um denjenigen Anteil des Blockcopolymers handelt, der innerhalb der Polymerblöcke eine hohe Festigkeit aufweist und somit relativ hart ist (die so genannten Hartblöcke oder Hartsegmente), wodurch dieser die kohäsiven Eigenschaften des Polymers im wesentlichen mitbestimmt, wird die Klebkraft der Hartblöcke auf mikroskopischer Ebene durch die Zugabe der Klebharze nicht verändert, wobei diese Polymerblöcke nur um ein Weniges zur Adhäsion beitragen. Da die Hartblöcke nicht mit den flüssigen Klebharzen mischbar sind, können die Hartblöcke im Verhältnis zu den flüssigen Klebharzen quasi als Füllstoff aufgefasst werden. Derartige Hartblöcke weisen üblicherweise Glasübergangstemperaturen von mehr als 90 °C auf.

Vielmehr müssen die Klebharze mit den Polymerblöcken vom Typ B - also mit den Blöcken mit Monomereinheiten, die substituierte und substituierte 1,3-Diene umfassen - im wesentlichen homogen mischbar sein. Bei diesen Polymerblöcken handelt es sich um denjenigen Anteil des Blockcopolymers, der weich ist (die so genannten Weichblöcke oder Weichsegmente). Durch die Zugabe der Klebharze werden diese Bereiche auf mikroskopischer Ebene noch weicher, ohne dass dabei die Scherfestigkeit der Klebemasse insgesamt verringert wird. Derartige Klebharze sind dem Fachmann in großer Anzahl hinreichend bekannt.

Mit dieser speziellen Zusammensetzung unterscheiden sich die erfindungsgemäßen Klebemassen signifikant von den vorbekannten Haftklebemassemischungen und ermöglichen daher mechanisch stabile Verklebungen auf unpolaren Substraten auch bei tiefen Temperaturen. Dies erlauben etwa die in US 5,453,319 beschriebenen Klebharze nicht, da diese aufgrund ihrer aromatischen Eigenschaften eine guten Mischbarkeit mit denen Polymerblöcken aus Vinylaromaten (Typ A) aufweisen und nicht mit den Polymerblöcken aus Dienen (Typ B), so dass die Kohäsion dieser Klebemasse insgesamt nicht hinreichend ist.

Die bei Raumtemperatur flüssigen Klebharze können aliphatische Klebharze sein. Durch die Wahl derartiger Klebharze kann auf besonders einfache Weise sichergestellt werden, dass diese mit den Polymerblöcken vom Typ B gut mischbar sind und mit den Polymerblöcken vom Typ A nicht homogen mischbar sind. Die hiermit erhaltenen flüssigen Klebharze sind also im Hinblick auf Mischbarkeit und Kompatibilität mit den Polymerblöcken vom Typ B hervorragend geeignet und ermöglichen gleichermaßen die Herstellung von Haftklebemassen mit einer hervorragenden mechanischen Stabilität auch bei niedrigeren Temperaturen.

Insbesondere hat es sich als vorteilhaft herausgestellt, wenn die Klebharze Polyterpenharze enthalten, bevorzugt solche auf der Basis von Limonenen und/oder Pinenen, insbesondere alpha-Pinen. Diese Klebharze liegen üblicherweise bei Raumtemperatur in fester Form vor und ergänzen die bei Raumtemperatur flüssigen Klebharze in idealer Weise, so dass insgesamt eine hohe Klebkraft auf unpolaren Substraten gewährleistet ist.

Ferner ist es günstig, wenn die Haftklebemasse hinsichtlich einer Glasübergangstemperatur von weniger als -15 °C angepasst ist, bevorzugt von weniger als -20 °C. Konkrete Maßnahmen zur Anpassung der Glasübergangstemperatur sind dem Fachmann hinreichend bekannt, etwa über die Wahl der jeweils verwendeten Monomereinheiten unter Verwendung der von Flory und Fox aufgestellten Gleichung, wie nachfolgend beschrieben. Eine derartig niedrige Glasübergangstemperatur ermöglicht es, mechanisch belastbare Verbindungen auch bei tiefen Temperaturen bis zu -20 °C durch Verwendung der erfindungsgemäßen Klebemasse herstellen zu können.

Als vorteilhaft hat es sich herausgestellt, wenn als Polymerblock vom Typ A jeweils ein Polymerblock eingesetzt wird, der Monomereinheiten aus der Gruppe unsubstituierter und/oder substituierter Styrole umfasst. Durch die Wahl derartiger Untereinheiten für das Basispolymer der Haftklebemasse wird eine besonders hohe Klebkraft auf niederenergetischen Oberflächen sichergestellt. Ganz besonders vorteilhafte Ergebnisse lassen sich durch die Verwendung eines besonders hohen Styrolgehalts im Blockcopolymer erzielen, nämlich wenn das erste Blockcopolymer und/oder das zweite Blockcopolymer zu einem Anteil von mindestens 20 Gew.-% Monomereinheiten aus der Gruppe unsubstituierter und/oder substituierter Styrole aufweist.

Überdies kann als Polymerblock vom Typ B jeweils ein Polymerblock ausgewählt werden, der Monomereinheiten aus der Gruppe unsubstituierter und/oder substituierter 1,3-Butadiene und/oder Isoprene umfasst. Eine derartige Beschaffenheit ermöglicht es, Klebemassen mit einem besonders hohen inneren Zusammenhalt zu realisieren. Dies ist insbesondere wichtig, wenn außerdem als Polymerblöcke vom Typ A solche mit Styrolen als Monomereinheiten eingesetzt werden, um insgesamt eine hohe mechanische Belastbarkeit der Verklebung auf niederenergetischen Oberflächen zu gewährleisten.

Des weiteren kann es von Vorteil sein, wenn die Untereinheiten im zweiten Blockcopolymer miteinander linear oder sternförmig verbunden sind. Hierbei werden Blockcopolymere erhalten, die aufgrund ihrer räumlichen Anordnung starke intermolekulare Wechselwirkungen mit anderen Polymermolekülen eingehen und so eine besonders hohe Kohäsion auch bei tiefen Temperaturen sicherstellen.

Schließlich ist es günstig, wenn das erste Blockcopolymer und das zweite Blockcopolymer zusammen zu einem Anteil von mindestens 20 Gew.-% und höchstens 70 Gew.-% vorliegen, bevorzugt zu einem Anteil von mindestens 30 Gew.-% und höchstens 60 Gew.-%, insbesondere zu einem Anteil von mindestens 35 Gew.-% und höchstens 55 Gew.-%, jeweils bezogen auf die Gesamtmasse der Klebemasse. Durch die Verwendung eines derart hohen Blockcopolymergehalts (entsprechend der Summe aus dem Anteil des ersten Blockcopolymers und dem Anteil des zweiten Blockcopolymers) wird eine grundsätzlich hohe Klebkraft der Klebemasse sichergestellt.

Eine weitere Aufgabe der vorliegenden Erfindung war es, ein haftklebriges Flächenelement zur Verfügung zu stellen, das auch bei niedrigen Temperaturen auf niederenergetischen Oberflächen eine mechanisch belastbare Verklebung ermöglicht. Diese Aufgabe wurde durch die Verwendung der zuvor beschriebenen Haftklebemasse zum Herstellen eines haftklebrigen Flächenelements sowie durch das so erhaltene haftklebrige Flächenelement gelöst. Infolge der Verwendung dieses haftklebrigen Flächenelements zum Verkleben mit einer Oberfläche, die eine Oberflächenenergie von weniger als 45 mJ/m$^2$ aufweist, konnten zudem auf derartigen Substraten auch bei tiefen Temperaturen besonders belastbare Verklebungen erhalten werden.

Die Erfindung betrifft die Zusammensetzung einer Haftklebemasse. Als Haftklebemassen werden Klebemassen bezeichnet, die bereits unter relativ schwachem Andruck eine dauerhafte Verklebung mit dem Substrat erlauben. Die Verklebbarkeit der Klebemassen beruht auf ihren adhäsiven Eigenschaften.

Eine derartige Klebemasse weist üblicherweise als Hauptbestandteil ein Basispolymer oder eine Mischung mehrerer Basispolymere auf. Diese können durch Zusätze weiterer Hilfsstoffe, die zudem auch polymerer Natur sein können, hinsichtlich des jeweils gewünschten Anforderungsprofils modifiziert werden.

Die vorliegende Haftklebemasse enthält zumindest zwei Copolymere als Basispolymere, nämlich ein erstes Blockcopolymer und ein zweites Blockcopolymer. Als Copolymere bezeichnet man Polymere, die aus mindestens zwei unterschiedlichen Arten von Monomereinheiten aufgebaut sind. Bei Blockcopolymeren handelt es sich um Copolymere, die als Struktureinheiten mindestens zwei unterschiedliche Polymerblöcke aufweisen. Blockcopolymere werden entsprechend der Anzahl an (unterschiedlichen) Blöcken unterschieden, die in ihnen enthalten sind, etwa als Diblockcopolymere (mit zwei Polymerblöcken), Triblockcopolymere (mit drei Polymerblöcken) oder Multiblockcopolymere (mit einer Vielzahl an Polymerblöcken).

Als Polymerblöcke werden Oligomere oder Polymere (Homopolymere) bezeichnet, die als Hauptstruktureinheit eine einzige Art an Monomereinheiten aufweisen, von denen eine Vielzahl im wesentlichen sequenziell untereinander verbunden ist. Zur gezielten Steuerung der physikalischen und chemischen Eigenschaften derartiger Polymerblöcke können diese darüber hinaus auch einzelne Monomereinheiten enthalten, die anders aufgebaut sind als die Hauptstruktureinheiten.

Die erfindungsgemäße Klebemasse weist als elastomere Komponente ein erstes Blockcopolymer und ein zweites Blockcopolymer auf; diese beiden - gegebenenfalls zusammen mit weiteren Bestandteilen der Klebemasse auf der Basis von Blockcopolymeren - tragen demnach zur Gesamtmasse der Blockcopolymere der Klebemasse bei.

Das erste Blockcopolymer ist in der Klebemasse zu einem Anteil von mindestens 50 Gew.-% vorhanden, bezogen auf die Gesamtmasse der Blockcopolymere; das erste Blockcopolymer bildet damit den polymeren Hauptbestandteil der Klebemasse.

Bei dem ersten Blockcopolymer handelt es sich um ein Diblockcopolymer, also um ein Polymer aus zwei unterschiedlichen Polymerblöcken, einem Polymerblock vom Typ A und einen Polymerblock vom Typ B. Da in dem ersten Blockcopolymer die Polymerblöcke vom Typ A und vom Typ B miteinander verbunden sind, ergibt sich für das erste Blockcopolymer die allgemeine Struktur A-B.

Ein Polymerblock vom Typ A umfasst untereinander verbundene Monomereinheiten aus der Gruppe der zumindest eine aromatische Gruppe enthaltenden Vinylverbindungen. Zusätzlich zu diesen Monomereinheiten können im Polymerblock vom Typ A auch weitere einzelne Monomereinheiten vorhanden sein.

Als zumindest eine aromatische Gruppe enthaltenden Vinylverbindungen gelten diejenigen Verbindungen, die eine unsubstituierte Vinylgruppe $H_3C=CH-$ oder eine von dieser abgeleitete einfach oder mehrfach substituierte Vinylgruppe enthalten, die mit mindestens einer organischen Gruppe verbunden ist, die aromatische Eigenschaften aufweist. Als derartige zumindest eine aromatische Gruppe enthaltende Vinylverbindung (auch als Vinylaromaten bezeichnet) ist grundsätzlich jede Verbindung geeignet, die unter diese Substanzklasse fällt; im einfachsten Fall handelt es sich um unsubstituiertes Styrol oder um substituierte Styrole. Derartige Monomere liegen im Polymerblock vom Typ A polymerisiert vor. Als Polymerblock vom Typ A gelten ebenso Polymerblöcke, die lediglich eine einzige Art an Monomeren der zumindest eine aromatische Gruppe enthaltenden Vinylverbindungen aufweisen, wie auch Polymerblöcke, die zwei oder mehr unterschiedliche Arten Monomere der zumindest eine aromatische Gruppe enthaltenden Vinylverbindungen aufweisen. Durch die Spezifizierung eines Polymerblocks als zum Typ A gehörig ist also weder festgelegt, wie viele Monomere in diesem Polymerblock enthalten sind, noch, ob die Monomereinheiten eines Polymerblocks vom Typ A im Vergleich zu anderen Polymerblöcken dieses Typs innerhalb desselben oder eines anderen Blockcopolymers identisch oder unterschiedlich sind.

Ein Polymerblock vom Typ B umfasst untereinander verbundene Monomereinheiten aus der Gruppe der unsubstituierten und substituierten 1,3-Diene. Als derartige unsubstituierte und substituierte 1,3-Diene sind grundsätzlich alle organischen Verbindungen geeignet, die zwei Doppelbindungen in 1,3-Stellung aufweisen; im einfachsten Fall handelt es sich um unsubstituiertes und/oder substituiertes 1,3-Butadien und/oder um Isopren. Derartige Monomere liegen im Polymerblock vom Typ B polymerisiert vor. Als Polymerblock vom Typ B gelten ebenso Polymerblöcke, die lediglich eine einzige Art an Monomeren aus der Gruppe unsubstituierter und substituierter 1,3-Diene aufweisen, wie auch Polymerblöcke, die zwei oder mehr unterschiedliche Arten Monomere aus dieser Gruppe aufweisen, also beispielsweise Copolymere aus Butadien und Isopren. Durch die Spezifizierung eines Polymerblocks als zum Typ B gehörig ist demnach weder festgelegt, wie viele Monomere in diesem Polymerblock enthalten sind, noch, ob die Monomereinheiten eines Polymerblocks vom Typ B im Vergleich zu anderen Polymerblöcken dieses Typs innerhalb desselben oder eines anderen Blockcopolymers identisch oder unterschiedlich sind.

Bei dem zweiten Blockcopolymer handelt es sich um ein Multiblockcopolymer, also um ein Polymer aus mehreren unterschiedlichen Polymerblöcken, wobei die Struktureinheiten dieses Multiblockcopolymers aus Polymerblöcken vom Typ A und Polymerblöcken vom Typ B bestehen. Das zweite Blockcopolymer ist aus Untereinheiten aufgebaut, die jeweils aus einem Polymerblock vom Typ A und einem Polymerblock vom Typ B bestehen, so dass die Untereinheiten also ebenfalls die allgemeine Struktur A-B besitzen.

Die Polymerblöcke vom Typ A und die Polymerblöcke vom Typ B werden aus den für das erste Blockcopolymer beschriebenen Verbindungsgruppen gewählt. Innerhalb einer Klebemasse können die im ersten Blockcopolymer gewählten Polymerblöcke vom Typ A und die im zweiten Blockcopolymer gewählten Polymerblöcke vom Typ A jeweils identisch oder aber unterschiedlich sein. Ebenso ist es erfindungsgemäß möglich, innerhalb einer Klebemasse die im ersten Blockcopolymer eingesetzten Polymerblöcke vom Typ B und die im zweiten Blockcopolymer eingesetzten Polymerblöcke vom Typ B jeweils identisch oder unterschiedlich zu wählen.

In dem zweiten Blockcopolymer der erfindungsgemäßen Haftklebemasse sind jeweils mindestens zwei und höchstens elf dieser A-B-Untereinheiten miteinander verbunden. Infolge dieser Verbindung kann das zweite Blockcopolymer unterschiedliche Strukturen aufweisen; so können die Untereinheiten beispielsweise linear miteinander verknüpft sein. Bei einer derartigen linearen Verknüpfung werden stets partiell alternierende Blockcopolymere vom allgemeinen Typ $(A-B)_n$ mit $2 \leq n \leq 11$ erhalten, wobei die Länge der Polymerblöcke vom Typ A oder vom Typ B innerhalb eines Blockcopolymers unterschiedlich sein kann. Dies ist darauf zurückzuführen, dass bei einer Verknüpfung zweier Untereinheiten, bei der zwei Polymerblöcke von einem identischen Typ miteinander verknüpft werden, diese beiden jeweils einem größeren Polymerblock entsprechen, der ebenfalls diesen Typ aufweist. So wird zum Beispiel bei einer Verknüpfung zweier A-B'-Untereinheiten über die Polymerblöcke vom Typ B ein Blockcopolymer vom Typ A-B'-B'-A erhalten, das zu der Beschreibung als Blockcopolymer vom Typ A-B"-A äquivalent ist, wobei der größere Polymerblock vom Typ B" den beiden miteinander verbundenen kleineren Polymerblöcken B'-B' entspricht (B' und B" gehören hierbei jeweils dem allgemeinen Typ B an). Dies ist darauf zurückzuführen, dass auch eine Verbindung zweier identischer Polymerblöcke vom Typ A oder vom Typ B jeweils selbst wieder ein größerer Polymerblock vom Typ A bzw. vom Typ B ist. Dabei hat es sich insgesamt als vorteilhaft erwiesen, wenn die endständigen Polymerblöcke des zweiten Blockcopolymers von härteren Polymerblöcken gebildet werden, vorliegend also von Polymerblöcken vom Typ A. (Für diesen Fall ergibt sich im Hinblick auf die homogene Mischbarkeit der bei Raumtemperatur flüssigen Klebharze also eine besonders günstige Kompatibilität mit dem Mittelblock.)

Demzufolge ist das zweite Blockcopolymer im Sinne dieser Erfindung also im einfachsten Fall eine Verknüpfung zweier A-B-Untereinheiten; diese lässt sich als Tetrablockcopolymer mit der allgemeinen Struktur A-B-A-B oder als Triblockcopolymer mit der allgemeinen Struktur A-B-A beschreiben.

Darüber hinaus können die A-B-Untereinheiten in dem zweiten Blockcopolymer auch sternförmig verbunden sein, so dass ein radiales Blockcopolymer erhalten wird. Als zentrale Verknüpfungsstelle kann etwa eine zusätzliche Verknüpfungseinheit dienen, die entweder Teil der Polymerblöcke ist oder separat eingesetzt wird.

Ungeachtet der beiden hier als besonders günstig hervorgehobenen Beispiele können die A-B-Untereinheiten im zweiten Blockcopolymer grundsätzlich jedoch in beliebiger Anordnung vorliegen, also etwa auch in verzweigten Verknüpfungen von A-B-Untereinheiten.

Es wird somit ein Gemisch an Blockcopolymeren als Basispolymer der Klebemasse erhalten, das zu mindestens 50 Gew.-% aus einem Diblockcopolymer besteht. Hierbei können auch Mischungen unterschiedlicher Blockcopolymere sowie teilweise oder vollständig hydrierte Produkte zum Einsatz kommen. Das Diblockcopolymer bestimmt die Weichheit der Klebemasse insgesamt und somit deren Klebkraft, während das Multiblockcopolymer im wesentlichen zu dessen Kohäsion beiträgt.

Unter Berücksichtigung dieser Einschränkung, also dass der größte Anteil aller in der Klebemasse enthaltener Blockcopolymere von dem ersten Blockcopolymer gebildet wird, können zusätzlich die Anteile des ersten Blockcopolymers und des zweiten Blockcopolymers in der Klebemasse derart spezifiziert werden, dass der Gesamtanteil des ersten Blockcopolymers und des zweiten Blockcopolymers in der Klebemasse mindestens 20 Gew.-% und höchstens 70 Gew.-% beträgt, bevorzugt mindestens 30 Gew.-% und höchstens 60 Gew.-% oder sogar mindestens 35 Gew.-% und höchstens 55 Gew.-%, jeweils bezogen auf die Gesamtmasse der Klebemasse.

Werden unsubstituierte und/oder substituierte Styrole als zumindest eine aromatische Gruppe enthaltende Vinylverbindungen eingesetzt, so kann außerdem der Anteil der styrolischen Monomereinheiten am ersten Blockcopolymer und/oder am zweiten Blockcopolymer zu mindestens 20 Gew.-% des jeweiligen Blockcopolymers gewählt werden, um eine gute Kohäsion der Klebemasse insgesamt sicherzustellen.

Die Blockcopolymere der erfindungsgemäßen Klebemasse lassen sich grundsätzlich über alle hierfür bekannten und geeigneten Verfahren zur Herstellung von Blockcopolymeren herstellen.

Zur gezielten Steuerung der klebtechnischen Eigenschaften weist die Klebemasse zusätzlich Klebharze auf. Derartige Klebharze werden üblicherweise den Basispolymeren beigemischt, um die Klebkraft der Klebemasse insgesamt zu steigern, die Klebemasse also klebriger zu machen.

Als Klebharze sind ausnahmslos alle bekannten und in der Literatur beschriebenen Klebharze einsetzbar. Üblicherweise handelt es sich um Mischungen unterschiedlicher Arten von Klebharzen, jedoch kann ein Klebharz auch aus einer einzigen Art Klebharz bestehen.

Als Klebharze können grundsätzlich alle geeigneten Klebharze eingesetzt werden, etwa nicht hydrierte, partiell hydrierte oder vollständig hydrierte Harze auf Basis von Kolophonium oder dessen Derivaten, hydrierte Polymerisate des Dicyclopentadiens, nicht hydrierte, partiell hydrierte, selektiv hydrierte oder vollständig hydrierte Kohlenwasserstoff-

harze auf Basis von $C_5$-, $C_5/C_9$- oder $C_9$-Monomerströmen, Polyterpenharze auf Basis von Limonen wie δ-Limonen und/oder von Pinenen wie α-Pinen (alpha-Pinen) und β-Pinen sowie Mischungen davon. Unter diesen kann beispielsweise alpha-Pinen zum Einsatz kommen. Dabei weist günstigerweise mindestens eines dieser Klebharze einen Erweichungspunkt von mindestens 100 °C auf (bestimmt nach dem Ring-Ball-Verfahren), ist also bei Raumtemperatur fest.

Bei der Auswahl eines Klebharzes ist es jedoch zur Realisierung der Erfindung wichtig, dass mindestens 30 Gew.-% der insgesamt verwendeten Klebharze von einem Klebharz oder von mehreren Klebharzen gebildet wird, das bei Raumtemperatur flüssig vorliegt bzw. die bei Raumtemperatur flüssig vorliegen.

Darüber hinaus darf das zumindest eine bei Raumtemperatur flüssige Klebharz nicht mit den Polymerblöcken vom Typ A homogen mischbar sein, stattdessen aber mit den Polymerblöcken vom Typ B. Demzufolge ist also auf die grundsätzlich schlechtere Mischbarkeit des flüssigen Klebharzes mit vinylaromatischen Polymerblöcken als mit aliphatischen Polymerblöcken zu achten.

Als homogen mischbar (kompatibel) werden zwei Komponenten angesehen, wenn sie in dem jeweils betrachteten Mengenverhältnis in einer homogenen und kontinuierlichen Phase vollständig miteinander vermischt werden können, ohne dass eine Phasentrennung beobachtet wird, sei es in Form einer Entmischung oder als disperses System, etwa als Emulsion oder Suspension. Infolge dieser besonderen Ausbildung des flüssigen Klebharzes ist das Klebharz also besonders mit den Elastomerblöcken der Blockcopolymere verträglich und daher innerhalb der Haftklebemasse bei den Polymerblöcken vom Typ B angeordnet, wodurch insgesamt eine gute Verklebbarkeit der Klebemasse bei tiefen Temperaturen realisiert wird.

Zusätzlich zu den Klebharzen kann die Haftklebemasse weitere Rezeptierungsbestandteile aufweisen, die etwa die Eigenschaften der Klebemasse gezielt ändern oder anpassen sollen. Dies können alle geeigneten Additive und Hilfsstoffe sein, beispielsweise primäre Antioxidantien wie zum Beispiel sterisch gehinderte Phenole, sekundäre Antioxidantien wie zum Beispiel Phosphite oder Thioether, Prozessstabilisatoren wie zum Beispiel C-Radikalfänger, Lichtschutzmittel wie zum Beispiel UV-Absorber und sterisch gehinderte Amine, Verarbeitungshilfsmittel oder Endblockerstärkerharze. Gegebenenfalls können auch weitere Polymere als Additive vorgesehen sein, bevorzugt solche von elastomerer Natur, zum Beispiel solche auf der Basis reiner Kohlenwasserstoffe wie etwa ungesättigte Polydiene, natürliches oder synthetisches Polyisopren oder Polybutadien, im wesentlichen gesättigte Elastomere wie etwa gesättigte Ethylen-Propylen-Copolymere, α-Olefin-Copolymere, Polyisobutylen, Butylkautschuk, Ethylen-Propylenkautschuk sowie chemisch funktionalisierte Kohlenwasserstoffe wie etwa halogenhaltige, acrylathaltige oder vinyletherhaltige Polyolefine, ohne sich durch diese exemplarische Aufzählung einschränken zu wollen.

Weiterhin ist es möglich, auch die polymeren Bestandteile der Klebemasse gezielt für einen Einsatz bei niedrigen Temperaturen anzupassen, etwa, indem die Blockcopolymere so gewählt werden, dass die resultierende Klebemasse eine Glasübergangstemperatur von weniger als -15 °C aufweist, bevorzugt von weniger als -20 °C.

Zur Erzielung einer Glasübergangstemperatur $T_G$ der Klebemasse von weniger als -15 °C können die einzelnen Bestandteile der Klebemasse hinsichtlich Struktur und mengenmäßigem Anteil in der Klebemasse etwa derart gewählt werden, dass sich der gewünschte Wert der Glasübergangstemperatur $T_G$ für die gesamte Klebemasse nach Gleichung (G1) in Analogie zu der von Flory und Fox vorgestellten Gleichung wie folgt ergibt:

$$\frac{\sum w_i}{T_G} = \sum_i \frac{w_i}{T_{G,i}} \qquad\qquad (G1)$$

Hierin stellt i die Laufzahl über die eingesetzten Bestandteile der Klebemasse dar, $w_i$ den Massenanteil des jeweiligen Bestandteils i (in Gew.-%) und $T_{G,i}$ die jeweilige Glasübergangstemperatur des Bestandteils i (in K).

Hierbei ist zu beachten, dass aus zwei Polymerblöcken aufgebaute Blockcopolymere wie etwa das erste Blockcopolymer oder das zweite Blockcopolymer zwei Glasübergangstemperaturen besitzen, die der Polymerblöcke vom Typ A (der Hartblöcke) und die der Polymerblöcke vom Typ B (der Weichblöcke). Entscheidend für die Berechnung der Glasübergangstemperatur des gesamten Blockcopolymers ist vorliegend ausschließlich die Glasübergangstemperatur der Polymerblöcke vom Typ B, da die eingesetzten Klebharze nur mit diesen Polymerblöcken verträglich sind. Daher sind auch bei der Bestimmung der jeweiligen Massenanteile der Blockcopolymere nur diejenigen der Polymerblöcke vom Typ B zu berücksichtigen.

Die Bestandteile der erfindungsgemäßen Klebemasse lassen sich mit allen bekannten und für derartige Mischungen geeigneten Verfahren vermischen, etwa in Lösung, in einer Dispersion, als Schmelze - beispielsweise in einem Extruder - oder in einem Mischaggregat, etwa einem Kneter. Die Herstellung der Massen kann kontinuierlich, halbkontinuierlich oder diskontinuierlich durchgeführt werden, zum Beispiel im Rahmen eines Batchverfahrens. Zur Anwendung können die abgemischten Haftklebemassen auf einen temporären Träger (einen so genannten Prozessliner) oder einen permanenten Träger aufgetragen werden.

Die erfindungsgemäße Klebemasse kann zur Herstellung eines haftklebrigen Flächenelements eingesetzt werden. Als Flächenelement im Sinne dieser Anmeldung gelten alle üblichen und geeigneten Gebilde mit im wesentlichen flächenförmiger Ausdehnung. Die erfindungsgemäßen Flächenelemente ermöglichen eine Verklebung und können verschieden ausgestaltet sein, insbesondere flexibel, als Klebefolie, Klebeband, Klebeetikett oder als Formstanzling. Bei haftklebrigen Flächenelementen handelt es sich um Flächenelemente, die bereits unter leichtem Anpressdruck verklebbar sind. Zu diesem Zweck ist das Flächenelement einseitig oder beidseitig mit zumindest einer Klebemasse ausgerüstet, wobei bei einem beidseitig verklebbaren Flächenelement die Klebemassen an den unterschiedlichen Seiten des Flächenelements identisch oder unterschiedlich sein können.

Ein derartiges Flächenelement kann einen Träger aufweisen oder aber trägerfrei ausgebildet sein. Üblicherweise wird ein Träger wie etwa Folien, Gewebe, Vliese, Schäume oder dergleichen verwendet, wenn das Flächenelement eine hohe mechanische Belastbarkeit aufweisen soll. Die trägerfreie Ausbildung eines Flächenelements ist hingegen etwa dann von Vorteil, wenn es gilt, Verklebungen mit einer möglichst geringen Verklebungshöhe zu realisieren.

Zur Herstellung eines derartigen Flächenelements kann ebenfalls auf alle üblichen Prozesstechnologien zurückgegriffen werden; so ist es beispielsweise möglich, die erfindungsgemäße Haftklebemasse aus Lösung, Dispersion oder aus der Schmelze zu verarbeiten. In der Regel werden Herstell- und Verarbeitungsverfahren angestrebt, bei denen die Verarbeitung aus der Lösung oder aus der Schmelze erfolgt, wobei letzteres besonders bevorzugt ist. Auch hier kann eine kontinuierliche, semikontinuierliche oder diskontinuierliche Prozessführung gewählt werden; neben Batchverfahren wird bei derartigen Fertigungsschritten häufig auf kontinuierliche Verfahren unter Verwendung eines Extruders zurückgegriffen.

Bei Verwendung der erfindungsgemäßen Klebemassen lassen sich haftklebrige Flächenelemente fertigen, die auch bei tiefen Umgebungstemperaturen hervorragend zum Verkleben mit unpolaren Substraten geeignet sind, also mit Oberflächen, die eine Oberflächenenergie von weniger als 45 mJ/m$^2$ aufweisen. So ist es beispielsweise möglich, haftklebrige Flächenelemente herzustellen, die auch bei tiefen Temperaturen eine hohe Klebkraft auf Polyethylen hoher Dichte (HDPE) von mindestens 8 N/cm aufweisen.

Weitere Vorteile und Anwendungsmöglichkeiten gehen aus den Ausführungsbeispielen hervor, die im folgenden näher beschrieben werden sollen.

Zur Verdeutlichung der allgemeinen erfinderischen Idee wurden exemplarisch fünf unterschiedliche Haftklebemassen hergestellt sowie zwei weitere Haftklebemassen als Vergleichsbeispiele (letztere enthielten eine bei Raumtemperatur flüssige Komponente, die jedoch nicht als Klebharz einsetzbar ist). Hierzu wurden die einzelnen Komponenten der Haftklebemassen in Toluol gelöst, wobei der Feststoffgehalt der sich ergebenden Lösung auf 40 Gew.-% eingestellt wurde. Die so erhaltene Lösung wurde mit Hilfe eines Streichbalkens einseitig auf eine Polyesterfolie (Polyethylenterephthalat mit einer Dicke von 36 μm) aufgetragen und das Toluol in einem anschließenden Trocknungsschritt bei 100 °C entfernt. Der erzielte Masseauftrag betrug jeweils 50 g/m$^2$.

Als erstes Blockcopolymer und als zweites Blockcopolymer wurden die folgenden kommerziell erhältlichen Blockcopolymere eingesetzt:

- Quintac 3433: Styrol-Isopren-Styrol-Copolymer (SIS) von Nippon Zeon mit einem Anteil an Diblockcopolymeren (erstes Blockcopolymer) von etwa 56 Gew.-% und insgesamt einem Anteil an Polymerblöcken aus Polystyrol (Typ A) von etwa 16 Gew.-%;

- Kraton D 1118: Styrol-Butadien-Styrol-Blockcopolymer (SBS) von Kraton Polymers mit einem Anteil an Diblockcopolymeren (erstes Blockcopolymer) von etwa 76 Gew.-% und insgesamt einem Anteil an Polymerblöcken aus Polystyrol (Typ A) von etwa 31 Gew.-%;

- Kraton D 1102: Styrol-Butadien-Styrol-Blockcopolymer von Kraton Polymers mit einem Anteil an Diblockcopolymeren (erstes Blockcopolymer) von etwa 14 Gew.-% und insgesamt einem Anteil an Polymerblöcken aus Polystyrol (Typ A) von etwa 30 Gew.-%; und

- Solprene 1205: Styrol-Butadien-Blockcopolymer (SB) von Housmex mit einem Anteil an Diblockcopolymeren (erstes Blockcopolymer) von etwa 100 Gew.-% und einem Anteil an Polymerblöcken aus Polystyrol (Typ A) von etwa 18 Gew.-%.

Als Klebharze wurden jeweils Mischungen zweier kommerziell erhältlicher Klebharze eingesetzt, von denen das eine bei Raumtemperatur flüssig war. Als bei Raumtemperatur festes Klebharz wurden verwendet:

- Pentalyn H-E: hydrierter Kolophoniumester von Eastman mit einem Erweichungspunkt von etwa 110 °C (Ring&Ball) und einer Glasübergangstemperatur von 48 °C;

- Dercolyte A 115: alpha-Pinenharz von DRT mit einer Erweichungstemperatur von etwa 115 °C und einer Glasübergangstemperatur von 74 °C; und

- Piccolyte A 135: alpha-Pinenharz von Hercules mit einer Erweichungstemperatur von etwa 135 °C und einer Glasübergangstemperatur von 89 °C.

Als bei Raumtemperatur flüssige Klebharze wurden verwendet:

- Picco A 10: flüssiges Kohlenwasserstoffharz von Eastman mit einer Glasübergangstemperatur von -48 °C;

- Foralyn 5020: flüssiges Kolophoniumharz von Eastman mit einer Glasübergangstemperatur von -31 °C; und

- Wingtack 10: flüssiges Kohlenwasserstoffharz von Goodyear mit einer Glasübergangstemperatur von -31 °C.

Als bei Raumtemperatur flüssige Komponente, die jedoch nicht als Klebharz dient, wurde für die Vergleichsbeispiele ein naphthenisches Öl mit einer Glasübergangstemperatur von -64 °C eingesetzt (Shellflex 371 von Shell).
Die fünf erfindungsgemäßen Klebemassen E1, E2, E3, E4 und E5 sowie die beiden Vergleichsbeispiele V1 und V2 hatten die in Tabelle 1 wiedergegebenen Zusammensetzungen (angegeben in Gew.-%).

|  | E1 | E2 | E3 | E4 | E5 | V1 | V2 |
|---|---|---|---|---|---|---|---|
| Quintac 3433 | 45 |  |  |  |  |  |  |
| Kraton D 1118 |  | 45 | 50 |  | 30 | 20 | 22,5 |
| Kraton D 1102 |  |  |  | 25 | 10 |  |  |
| Solprene 1205 |  |  |  | 25 |  | 20 | 22,5 |
| Pentalyn H- | 35 | 35 |  |  |  |  |  |
| Dercolyte A115 |  |  | 30 | 30 | 35 |  |  |
| Piccolyte A135 |  |  |  |  |  | 50 | 46 |
| Picco A 10 | 20 |  |  |  |  |  |  |
| Foralyn 5020 |  | 20 |  |  |  |  |  |
| Wingtack 10 |  |  | 20 | 20 | 25 |  |  |
| Shellflex 371 |  |  |  |  |  | 10 | 9 |

Tabelle 1

Bei den als Vergleichsbeispiele gewählten Klebemassen handelt es sich um Haftklebemassen auf der Basis von Blockcopolymeren, die jeweils einen großen Anteil an Klebharzen aufweisen sowie zusätzlich ein flüssiges Öl, das selber jedoch keine haftklebrigen Eigenschaften aufweist.
Vor der Auftragung dieser Klebemassen wurde diesen je ein halber Massenanteil eines Alterungsschutzmittels (sterisch gehindertes Phenol; Irganox 1010 von Ciba Additive) und eines UV-Schutzmittels (Tinuvin P von Ciba Additive) zugesetzt.
Die so erhaltenen einseitig haftklebrigen Flächenelemente wurden im Hinblick auf ihre klebtechnischen Eigenschaften untersucht, nämlich hinsichtlich der Klebkraft, der Anfassklebrigkeit und der Scherstandzeit.
Die Bestimmung der Klebkraft wurde wie folgt durchgeführt: Als definierter Haftgrund wurde eine Stahlfläche sowie auch eine Polyethylenfläche (PE) eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180 ° vom Haftgrund mit einem Zugprüfungsgerät (Firma Zwick) abgezogen und die hierfür bei Raumtemperatur benötigte Kraft gemessen. Der Messwert (in N/cm) ergab sich als Mittelwert aus drei Einzelmessungen.

Die Scherfestigkeit des verklebbaren Flächenelements als Maß für die innere Festigkeit der Klebemasse wurde in einem statischen Schertest als Scherstandzeit bestimmt. Zur Messung wurde ein Streifen des verklebbaren Flächenelements mit einer Breite von 13 mm und einer Länge von 20 mm auf einen definierten Prüfuntergrund aus Stahl aufgebracht und mit konstantem Anpressdruck viermal in Längsrichtung mit einer Stahlrolle von 2 kg bei einem Vorschub von 30 mm/min aufgedrückt. Das verklebbare Flächenelement wurde bei Raumtemperatur einer konstanten Scherbelastung ausgesetzt und die Zeit bis zum Abscheren vom Prüfuntergrund als Scherstandzeit (in Minuten) gemessen. Die jeweiligen Werte der Scherstandzeit ergeben sich als Mittelwert aus drei Messungen. Die Scherbelastung betrug unter Normbedingungen (das heißt bei einer Umgebungstemperatur von 23 °C und einer relativen Luftfeuchtigkeit von 50 %) 10 N oder bei einer Umgebungstemperatur von 60°C 5 N.

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des verklebbaren Flächenelements wurde mit der klebenden Seite nach oben unter Spannung horizontal auf der Prüfebene befestigt. Eine Probenkugel aus Stahl (Durchmesser: 11 mm; Masse: 5,6 g) wurde mit Aceton gereinigt und für 30 min im Raumklima (Temperatur: 23 °C +/- 1 °C; relative Luftfeuchtigkeit: 50 % +/- 1 %) konditioniert. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient als inverses Maß für die Anfassklebrigkeit der Selbstklebemasse bei einem polaren Rollkörper (d.h. je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des verklebbaren Flächenelements.

Schließlich wurde für jede Haftklebemasse die Glasübergangstemperatur mittels DSC bestimmt.

Die hierbei erhaltenen Ergebnisse sind in Tabelle 2 wiedergegeben.

Tabelle 2

| Probe | Klebkraft [N/cm] | | | Scherstandzeit [min] | | Rolling-Ball-Tack [mm] | Glasübergangstemperatur [°C] |
|---|---|---|---|---|---|---|---|
| | Stahl/23°C | PE/23°C | PE/-10°C | 23 °C | 60 °C | | |
| E1 | 9,7 | 5,9 | 3,4 | >10.000 | 359 | 23 | -28 |
| E2 | 12,8 | 10,9 | 3,6 | >10.000 | 5623 | 26 | -32 |
| E3 | 9,9 | 6,6 | 7,7 | >10.000 | >10.000 | 15 | -34 |
| E4 | 6,1 | 4,8 | 7,9 | >10.000 | >10.000 | 31 | -33 |
| E5 | 9,9 | 8,0 | 15,7 | >10.000 | 8742 | 38 | -24 |
| V1 | 11,3 | 10,2 | 0,7 | >10.000 | 7430 | 32 | -12 |
| V2 | 7,9 | 5,0 | 1,0 | >10.000 | 5214 | 39 | -17 |

Die Messungen zeigen, dass die Proben und die Vergleichsbeispiele bei Raumtemperatur auf Stahl- und Polyethylensubstraten eine durchschnittliche Klebkraft aufwiesen. Bei einer Umgebungstemperatur von -10 °C zeigten die erfindungsgemäßen Proben jedoch auf Polyethylen eine signifikant höhere Klebkraft als die mit einem flüssigen Öl abgemischten Klebemassen der Vergleichsbeispiele. Die für die erfindungsgemäßen Klebemassen bestimmten Klebkräfte bei tiefen Temperaturen waren um einen Faktor von 4 bis 10 größer als die entsprechenden Werte der Vergleichsbeispiele, in einem Fall sogar um einen Faktor von mehr als 22. In diesem Fall (Probe E5) handelte es sich um eine Klebemasse aus einer Basispolymermischung (etwa 40 Gew.-%) und Klebharzen (etwa 60 Gew.-%), wobei etwa 60 Gew.-% der Basispolymermischung aus einem Diblockcopolymer mit Polystyrolblöcken und Polybutadienblöcken bestand (entsprechend 24 Gew.-% bezogen auf die Klebemasse) und wobei etwa 42 Gew.-% der Klebharze bei Raumtemperatur flüssige aliphatische Klebharze waren und die restlichen 58 Gew.-% der Klebharze feste alpha-Pinenharze (entsprechend etwa 25 Gew.-% bzw. 35 Gew.-% bezogen auf die Klebemasse). Die hohe Klebkraft dieser Probe wurde auf den besonders hohen Anteil an Klebharzen umfassend feste und flüssige Klebharze zurückgeführt.

Bei Raumtemperatur wiesen alle untersuchten Proben eine hohe Scherstandzeit auf. Diese fiel erwartungsgemäß bei einem Teil der erfindungsgemäßen Klebemassen (E1 und E2) bei höheren Temperaturen deutlich niedriger aus, da diese Klebemassen für einen Einsatz bei tiefen Temperaturen optimiert waren und einen im Verhältnis zu den festen Bestandteilen des Klebharzes nur geringen Anteil flüssiger Klebharze besaßen. Die übrigen Proben E3, E4 und E5 wiesen hingegen sogar bei den höheren Temperaturen höhere Scherstandzeiten auf als die Klebemassen der Vergleichsbeispiele.

Die Anfassklebrigkeit gegenüber einem Probenkörper mit einer polaren Oberfläche (einer Stahlkugel) war bei allen Beispielen hinreichend gut, bei Probe E3 sogar sehr gut. Die gemessenen Glasübergangstemperaturen lagen bei den erfindungsgemäßen Proben durchweg unter -20 °C, bei den Vergleichsbeispiele hingegen wurden höhere Glasübergangstemperaturen bestimmt.

Demzufolge ist ersichtlich, dass es infolge des Einsatzes von flüssigen Klebharzen möglich ist, Haftklebemassen herzustellen, die auch bei niedrigen Temperaturen noch eine sehr hohe Klebkraft zu unpolaren Substraten aufweisen. Dies wurde hingegen bei den entsprechend mit Öl abgemischten Haftklebemassen der Vergleichsbeispiele nicht beobachtet.

**Patentansprüche**

1. Haftklebemasse umfassend Klebharze, ein erstes Blockcopolymer der allgemeinen Struktur A-B und ein zweites Blockcopolymer, das aus mindestens zwei und höchstens elf verbundenen Untereinheiten der allgemeinen Struktur A-B besteht,
   wobei A jeweils ein Polymerblock ist, der Monomereinheiten aus der Gruppe der zumindest eine aromatische Gruppe enthaltenden Vinylverbindungen umfasst,
   wobei B jeweils ein Polymerblock ist, der Monomereinheiten aus der Gruppe der unsubstituierten und substituierten 1,3-Diene umfasst, und
   wobei das erste Blockcopolymer zu einem Anteil von mindestens 50 Gew.-% vorhanden ist, bezogen auf die Gesamtmasse der Blockcopolymere in der Klebemasse,
   **dadurch gekennzeichnet, dass**
   mindestens 30 Gew.-% der Klebharze bei Raumtemperatur flüssig sind, bezogen auf die Gesamtmasse der Klebharze,
   wobei die bei Raumtemperatur flüssigen Klebharze Klebharze sind, die mit den Polymerblöcken A nicht homogen mischbar sind und außerdem mit den Polymerblöcken B im wesentlichen homogen mischbar sind.

2. Haftklebemasse nach Anspruch 1, **dadurch gekennzeichnet, dass** die bei Raumtemperatur flüssigen Klebharze aliphatische Klebharze sind.

3. Haftklebemasse nach Anspruch 1 oder 2, **dadurch gekennzeichnet, dass** die Haftklebemasse hinsichtlich einer Glasübergangstemperatur von weniger als -15 °C angepasst ist, bevorzugt von weniger als -20 °C.

4. Haftklebemasse nach einem der Ansprüche 1 bis 3, **dadurch gekennzeichnet, dass** die Klebharze Polyterpenharze umfassen, bevorzugt solche auf der Basis von Limonenen und/oder Pinenen, insbesondere alpha-Pinen.

5. Haftklebemasse nach einem der Ansprüche 1 bis 4, **dadurch gekennzeichnet, dass** die Klebharze einen Erweichungspunkt von mindestens +100 °C aufweisen.

6. Haftklebemasse nach einem der Ansprüche 1 bis 5, **dadurch gekennzeichnet, dass** A jeweils ein Polymerblock ist, der Monomereinheiten aus der Gruppe unsubstituierter und/oder substituierter Styrole umfasst.

7. Haftklebemasse nach einem der Ansprüche 1 bis 6, insbesondere nach Anspruch 6, **dadurch gekennzeichnet, dass** B jeweils ein Polymerblock ist, der Monomereinheiten aus der Gruppe unsubstituierter und/oder substituierter 1,3-Butadiene und/oder Isoprene umfasst.

8. Haftklebemasse nach einem der Ansprüche 1 bis 7, **dadurch gekennzeichnet, dass** das erste Blockcopolymer und/oder das zweite Blockcopolymer zu einem Anteil von mindestens 20 Gew.-% Monomereinheiten aus der Gruppe unsubstituierter und/oder substituierter Styrole aufweist.

9. Haftklebemasse nach einem der Ansprüche 1 bis 8, **dadurch gekennzeichnet, dass** die Untereinheiten im zweiten Blockcopolymer miteinander linear oder sternförmig verbunden sind.

10. Haftklebemasse nach einem der Ansprüche 1 bis 9, **dadurch gekennzeichnet, dass** das erste Blockcopolymer und das zweite Blockcopolymer zusammen zu einem Anteil von mindestens 20 Gew.-% und höchstens 70 Gew.-% vorliegen, bevorzugt zu einem Anteil von mindestens 30 Gew.-% und höchstens 60 Gew.-%, insbesondere zu einem Anteil von mindestens 35 Gew.-% und höchstens 55 Gew.-%, jeweils bezogen auf die Gesamtmasse der Klebemasse.

11. Verwendung einer Haftklebemasse nach einem der Ansprüche 1 bis 10 zum Herstellen eines haftklebrigen Flächenelements.

12. Haftklebriges Flächenelement umfassend eine Haftklebemasse nach einem der Ansprüche 1 bis 10.

13. Verwendung eines haftklebrigen Flächenelements nach Anspruch 12 zum Verkleben mit einer Oberfläche, die eine Oberflächenenergie von weniger als 45 mJ/m$^2$ aufweist.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5453319 A

- EP 1151052 A